# EUROPEAN PATENT SPECIFICATION

(11) **EP 3 188 893 B1**
(45) Date of publication and mention of the grant of the patent: **04.07.2018**
(21) Application number: 15763109.4
(22) Date of filing: 31.07.2015
(51) Int. Cl.: B29C 65/08, B29C 44/56, B29C 45/14, B29L 31/30

(54) **PRODUCTION METHOD FOR A SUNVISOR AND A SUNVISOR**
VERFAHREN ZUR HERSTELLUNG EINER SONNENBLENDE UND EINE SONNENBLENDE
PROCÉDÉ DE FABRICATION D'UN PARE-SOLEIL ET UN PARE-SOLEIL

(30) Priority: 03.09.2014 TR 201410340
(43) Date of publication of application: 12.07.2017
(73) Proprietor: Pimsa Otomotiv Anonim Sirketi, Gebze Kocaeli (TR)
(72) Inventor: INCEKARA, Emre, Kocaeli (TR); YIGIT, Cem, Kocaeli (TR); ÖZÇAKIR, Ali, Kocaeli (TR); YAMAN, Hüseyin, Kocaeli (TR); GÜR, Süleyman, Kocaeli (TR); SEYMAN, Ömür, Kocaeli (TR)
(74) Representative: Yamankaradeniz, Kemal
(86) International application number: PCT/TR2015/050051
(87) International publication number: WO 2016/036333

(56) References cited:
- WO-A1-2006/091532
- CN-A- 102 717 760
- DE-A1- 10 327 741
- JP-A- H02 165 941
- JP-B2- 3 339 606
- KR-A- 20060 021 554

## Description

### Field of the Invention

The present invention relates to a production method for a sunvisor which is used in motor vehicles such as automobiles, buses (passenger car), trucks, construction equipments in automotive sector in order to get protected from sun rays, and the sunvisor produced by this method.

### Background of the Invention

In the existing situation weight of sunvisors and number of components are the issue. The labor intent is higher and, in the meantime manufacturing inefficiencies are another problem area.

Some patent applications has been observed related with this invention.One of these is the utility model application No. 2010/06735 titled "a modular sunvisor". In the abstract of this application, the following discloses: "The invention relates to a modular sunvisor (1) which prevents sun rays from falling on the eyes of the driver and the passenger. The sunvisor (1) according to the invention comprises a fixing bracket (2) fixed at the vehicle ceiling, a connection axle one end of which gets into the fixing bracket (2), a shaft holding bracket (4) into which the other end of the connection shaft (3) gets, a hook holding bracket (5) getting through the hook at the vehicle ceiling, a wire (6) on which the axle holder bracket (4) and the hook holder bracket (5) are fixed, one slot (7) in which the wire (6) is places wherein it further comprises two body pieces (7) being mounted on each other, and two covers (8) which frames the surfaces of the body pieces (7) which do not contact with each other. Modular sunvisor (1) is produced by assembling these pieces together.

The US patent document No. US2011012387, another application known in the state of the art discloses a sunvisor produced by the method of molding by injection.

The above mentioned applications and the state of the art do not disclose lamination of craft paper and cross linked polyethylene foam.

Consequently, there is a need for a development in the state of the art, due to the above mentioned disadvantages and the inefficiency of existing solutions about the subject.

### Object of the Invention

The present invention aims at solving the disadvantages mentioned above, being developed inspiring from the existing conditions.

The object of the invention is to decrease the diversity of materials used in the internal parts of the sunvisor, enable the piece to be lighter, decrease laboring costs due to insufficient mounting pieces and increase production capacity, by means of the sunvisor which is produced by connecting the foam preferably made of polyurethane and cross linked polyethylene with preferably craft paper lamination in the mold.

Craft paper and lamination of the foam made of cross linked polyethylene material, used in the preferred embodiment of the invention, is used together in such an operation for the first time. The product obtained as a result of lamination both provides rigidity to the material and enables to decrease sub-materials used in the existing products and reduce the costs significantly. Also, as its production is practical, it makes a great contribution to capacity increase and significantly reduces laboring costs as mentioned before. Besides, the product gets lighter due to the low number of the used materials. The used materials are localized, because the weldable foam material (duflex) used in the previous products is exported from abroad and the prices are high for the unit product. What makes this exported product special is that it can make welding in high frequency machine. However, we can perform this welding in high frequency welding machines with craft paper and the foam made of cross linked polyethylene material that we use. We also make it cheaper by localizing the used product.

Structural and characteristic features and all advantages of the invention will be understood more clearly by the detailed description with references to the attributed figures; therefore evaluation should be made considering these figures and the detailed description.

### Description of the Figures

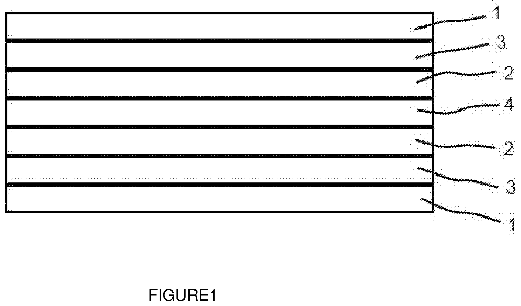

**Figure 1** shows the layers of the preferred embodiment of the sunvisor obtained as a result of the inventive method of production.

### Piece References

**1.** Outer Layer
**2.** Foam
**3.** Paper
**4.** Filler Layer

The drawings must not be scaled and unnecessary details to understand the present invention may be neglected. Besides, the pieces which are at least widely identical or having functions at least widely identical are shown by the same numbers.

### Detailed Description of the Invention

This detailed description discloses the preferred embodiments of the invention for a better understanding of the subject without creating any limiting effects.

The sunvisor according to the invention is composed of 4 layers: outer layer (1), foam (2), paper (3) and filler layer (4). The outer layer (1) is made of PVC (polyvinyl chloride) and covers the sunvisor from outermost. The foam (2) is layer which is under the outer layer (1) and is laminated by the paper (3). The paper (3) is the layer laminated by the foam (2).

Filler layer (4) is the innermost layer made of polyurethane material.

The sunvisor, the features of the layers of which are given above comprises the operation steps of:
- laminating paper (3) and foam (2) to each other in lamination device,
- placing the material containing paper (3) and foam (2) obtained by said lamination process into the mould in polyurethane injection machine,
- injecting the filler layer (4) made of polyurethane material into said mould, after placement,
- removing the material in the mould out of the mould after injection,
- removing the flashes by means of emery, if there is flash on the material taken out of the mould,
- welding the outer layer (1) made of PVC material onto said filler layer (4) in the high frequency welding machine.

In a preferred embodiment of the invention, after welding the outer layer (1) made of PVC material onto the filler layer (4), the coating is notched and the flashes of the outer layer detaches by itself.

In the preferred embodiments of the invention, craft paper can be used as said paper (3). Besides, as equivalent to craft paper, testliner or fluting or craftliner type paper can also be used. Characteristics of these types of paper are given below:
- Testliner type paper is the type of paper which is recycled paper based and has lower resistance to explosion and damp than craftliner paper than craftliner paper according to its class. Density of testliner paper ranges between 100-250 g/m².
- Fluting type paper is produced from recycled paper, and is used in the curves of paper-based corrugated board (mid-layers (b+c+e wave)). As it was produced from hay, it is also known as hay paper. Density of fluting type paper ranges between 90-200 g/m².
- Craftliner type paper is produced from trees with soft wood such as pine, fir, spruce with long fiber, by sulphate process, and it has high endurance. Craftliner is cellulose-based and has more than 3.5 explosion index up to 400 gr/m², with high resistance to damp. The density of craftliner type paper ranges between 115-400 g/m².

In other preferred embodiments of the invention, foam (2) made of cross linked polyethylene (XLPE) or polyurethane or polyester or polypropylene material is used as said foam. For polyurethane material, diphenylmethane diisocyanate (MDI)) or (toluene diisocyanate (TDI)) can be used.

In the preferred embodiments of the invention, foam (2) may have open or close cell structure.

In another preferred embodiment of the invention, in the step of laminating paper (3) and foam (2) to each other in lamination device, lamination process is carried out by the infrared type hot melt method.

In the production method for sunvisor according to the invention, the method of laminating paper (3) and foam (2) to each other in lamination device by infrared type hot melt method is carried out like this: First of all, lamination device with infrared heating works with the principle of hot air blowing. The lamination device includes a head with 15 heating resistors. The air is blown by the help of a pump and the air passing through the hot resistor is heated. At the rear part of the device, there are two feeding parts one at the upper and the other at the lower part. Preferably, the XLPE (cross linked polyethylene) foam (2) that we produce is hanged on the upper feeding part in a roller shape. The paper (3) is hanged on the lower feeding part. Both the paper (3) and the foam (2) are passed through cylinders and are combined in front of the head including the resistors. Tensions of both materials are adjusted. The pressing cylinder is lowered to apply the proper pressure. Then, the head blowing hot air is approached to the connection point of the two materials and the lamination process starts. When the surface of the foam (2) made of XLPE material contacts with hot air, it melts and sticks to the paper (3) by passing through pressing cylinder. The product obtained after sticking is rolled to the shaft and the processes are completed.

## Claims

1. A production method for sunvisor used inside motor vehicles in automotive sector, **characterized in** comprising respectively process steps of
- laminating a paper (3) and a foam (2) to each other in lamination device,
- placing a material containing the paper (3) and the foam (2) obtained by said lamination process into a mould in a polyurethane injection machine,
- injecting a filler layer (4) made of polyurethane material into said mould, after placement,
- removing the material in the mould out of the mould after injection,
- welding an outer layer (1) made of PVC material onto said filler layer (4) in a high frequency welding machine.

2. The method according to Claim 1, **characterized in** comprising process step of
- removing the flashes of the outer layer (1) by means of emery, if there is flash on the outer layer (1),
after the step of welding the outer layer (1) made of PVC material onto said filler layer (4) in the high frequency welding machine.

3. The method according to Claim 1, **characterized in that**
- craft paper is used as said paper (3)

4. The method according to Claim 1, **characterized in that**
- testliner or fluting or craftliner type paper can be used as said paper (3).

5. Method according to Claim 1, **characterized in that**
- foam (2) made of cross linked polyethylene or polyurethane or polyester or polypropylene material is used as said foam (2).

6. The method according to Claim 1, **characterized in that**
- lamination process is carried out by the infrared type hot melt method, in the step of laminating paper (3) and foam (2) to each other in lamination device.

7. A sunvisor used inside motor vehicles in automotive sector, **characterized in** comprising respectively
- paper (3) and foam (3) laminated to each other in a lamination device,
- a filler layer (4) made of polyurethane,
- an outer layer (1) made of PVC, welded on said filler layer (4) in a high frequency welding machine.

8. Sunvisor according to Claim 7, **characterized in that**
- said paper (3) is craft paper.

9. Sunvisor according to Claim 7, **characterized in that**
- said paper (3) is testliner or fluting or craftliner type paper.

10. Sunvisor according to Claim 7, **characterized in that**
- said foam (2) is cross linked polyethylene or polyethylene or polyester or propylene foam (2).

## Patentansprüche

1. Herstellungsverfahren für eine in einem Kraftfahrzeug der Automobilindustrie verwendete Sonnenblende, **dadurch gekennzeichnet, dass** das Verfahren die folgenden Verfahrensschritte umfasst:
- Laminieren eines Papiers (3) und eines Schaums (2) in einer Laminiervorrichtung aneinander;
- Platzieren eines Materials, welches das Papier (3) und den Schaum (2) enthält, das durch das Laminierverfahren erhalten worden ist, in einer Form einer Polyurethan-Injektionsmaschine;
- Injizieren einer Füllstoffschicht (4) aus Polyurethanmaterial in die Form nach der Platzierung;
- Entfernen des Materials in der Form nach der Injektion aus der Form;
- Schweißen einer äußeren Schicht (1) aus PVC-Material auf die Füllstoffschicht (4) in einer Hochfrequenzschweißmaschine.

2. Verfahren nach Anspruch 1, **dadurch gekennzeichnet, dass** es nach dem Schritt des Schweißens der äußeren Schicht (1) aus PVC-Material auf die Füllstoffschicht (4) in der Hochfrequenzschweißmaschine den folgenden Verfahrensschritt umfasst:
- Entfernen der Formgrate der äußeren Schicht (1) durch ein Schleifmittel, wenn sich an der äußeren Schicht (1) Formgrate befinden.

3. Verfahren nach Anspruch 1, **dadurch gekennzeichnet, dass**
- Kraftpapier als das Papier (3) verwendet wird.

4. Verfahren nach Anspruch 1, **dadurch gekennzeichnet, dass**
- Papier vom Typ Testliner oder Wellenstoff oder Kraftliner als das Papier (3) verwendet werden kann.

5. Verfahren nach Anspruch 1, **dadurch gekennzeichnet, dass**
- Schaum (2) aus vernetztem Polyethylen- oder Polyurethan- oder Polyester- oder Polypropylenmaterial als der Schaum (2) verwendet wird.

6. Verfahren nach Anspruch 1, **dadurch gekennzeichnet, dass**
- das Laminierverfahren durch das Infrarotheißschmelzverfahren in dem Schritt des Laminierens eines Papiers (3) und eines Schaums (2) in der Laminiervorrichtung aneinander ausgeführt wird.

7. Sonnenblende zur Verwendung in einem Kraftfahrzeug der Automobilindustrie, **dadurch gekennzeichnet, dass** die Sonnenblende folgendes umfasst:
- Papier (3) und Schaum (3), die in einer Laminiervorrichtung aneinander laminiert werden;
- eine Füllstoffschicht (4) aus Polyurethan;
- eine äußere Schicht (1) aus PVC, in einer Hochfrequenzschweißmaschine an die Füllstoffschicht (4) geschweißt.

8. Sonnenblende nach Anspruch 7, **dadurch gekennzeichnet, dass**
- das Papier (3) Kraftpapier ist.

9. Sonnenblende nach Anspruch 7, **dadurch gekennzeichnet, dass**
- das Papier (3) Papier vom Typ Testliner oder Wellenstoff oder Kraftliner ist.

10. Sonnenblende nach Anspruch 7, **dadurch gekennzeichnet, dass**
- der Schaum (2) vernetzter Polyethylen- oder Polyethylen- oder Polyester- oder Propylenschaum (2) ist.

## Revendications

1. Procédé de production d'un pare-soleil utilisé à l'intérieur de véhicules à moteur dans le secteur automobile, **caractérisé en ce qu'**il comprend respectivement les étapes consistant à
laminer un papier (3) et une mousse (2) l'un à l'autre dans un dispositif de laminage,
placer un matériau contenant le papier (3) et la mousse (2) obtenu par ledit procédé de laminage dans un moule dans une machine d'injection de polyuréthane,
injecter une couche de remplissage (4) en matériau polyuréthane dans ledit moule, après le placement,
retirer le matériau du moule après injection,
souder une couche externe (1) en PVC sur ladite couche de remplissage (4) dans une machine à souder à haute fréquence.

2. Procédé selon la revendication 1, comprenant en outre l'étape consistant à
enlever les bavures de la couche externe (1) au moyen d'émeri, s'il y a des bavures sur la couche externe (1),
après le soudage de la couche externe (1) en PVC sur ladite couche de remplissage (4) dans la machine à souder à haute fréquence.

3. Procédé selon la revendication 1, **caractérisé en ce que**
du papier de bricolage est utilisé comme ledit papier (3).

4. Procédé selon la revendication 1, **caractérisé en ce que**
du papier Testliner ou à canneler ou Kraftliner peut être utilisé comme ledit papier (3).

5. Procédé selon la revendication 1, **caractérisé en ce que**
une mousse (2) en matériau polyéthylène réticulé ou polyuréthane ou polyester ou polypropylène est utilisée comme ladite mousse (2).

6. Procédé selon la revendication 1, **caractérisé en ce que**
le laminage est effectué par la méthode de thermofusion de type infrarouge, à l'étape de laminage du papier (3) et de la mousse (2) l'un à l'autre dans le dispositif de laminage.

7. Pare-soleil utilisé à l'intérieur de véhicules à moteur dans le secteur automobile, **caractérisé en ce qu'**il comprend respectivement
du papier (3) et de la mousse (3) laminés l'un à l'autre dans un dispositif de laminage,
une couche de remplissage (4) en polyuréthane,
une couche externe (1) en PVC, soudée sur ladite couche de remplissage (4) dans une machine à souder à haute fréquence.

8. Pare-soleil selon la revendication 7, **caractérisé en ce que**
ledit papier (3) est du papier de bricolage.

9. Pare-soleil selon la revendication 7, **caractérisé en ce que**
ledit papier (3) est du papier Testliner ou à canneler ou Kraftliner.

10. Pare-soleil selon la revendication 7, **caractérisé en ce que**
ladite mousse (2) est de la mousse de polyéthylène réticulé ou de polyéthylène ou de polyester ou de propylène (2).
